# EUROPEAN PATENT APPLICATION

(11) **EP 2 341 721 A1**
(43) Date of publication of application: **06.07.2011**
(21) Application number: 09820200.5
(22) Date of filing: 01.07.2009
(51) Int. Cl.: H04W 4/16, H04M 3/436

(54) **CALL SCREENING METHOD AND SYSTEM**

(30) Priority: 13.10.2008 CN 200810217024
(71) Applicant: Huawei Technologies Co., Ltd., Shenzhen, Guangdong 518129 (CN)
(72) Inventor: HU, Haihua, Shenzhen Guangdong 518129 (CN); DING, Jianjun, Shenzhen Guangdong 518129 (CN); CAI, Yongfeng, Shenzhen Guangdong 518129 (CN); YU, Qingping, Shenzhen Guangdong 518129 (CN)
(74) Representative: Körber, Martin Hans
(86) International application number: PCT/CN2009/072579
(87) International publication number: WO 2010/043124

(57) **Abstract**

A call screening method and system are disclosed. The embodiments of the present invention arrange a logic unit, e.g. a secretary station, in the existing network, to perform a screening on a call initiated by a calling party to a called party; after the call passed the screening, send a request for deactivating CFU to a visited MSC of the called party, after the identifier of CFU held in the visited MSC of the called party is deactivated, acquire a roaming number from the visited MSC of the called party and initiate a call to the called party according to the roaming number. In such a way, a roaming number is acquired from the visited MSC of the called party while the call screening is performed, and the call from the calling party to the called party is no longer subjected to restriction of the visited MSC of the called party. As a result, a normal call will not be limited when the call screening is performed.

## Description

The present application claims priority of Chinese patent application 200810217024.7 submitted to the Chinese Patent Office on October 13, 2008, and titled as "call screening method and system", which is incorporated herein by reference in its entirety.

### FIELD OF THE INVENTION

The present invention relates to the technical field of communication, and particularly to a call screening method and system.

### BACKGROUND

With the development of intelligent service, call screening is applied more and more widely. Call screening is realized by transferring a call unconditionally to a node in the network that implements the screening, and providing a function of call screening by the node, acquiring, after the screening succeeds, a Mobile Station Roaming Number (MSRN) by the node from a Visited Mobile Switch Center (VMSC) of the called party, then performing an outbound call by the node through an Initial Address Message (IAM), with the called number being the MSRN.

As an identifier of Call Forward Unconditional (CFU) is held in the visited MSC of the called party, when the screening node acquires the MSRN via a Provide Roaming Number (PRN), the MSRN may not be acquired from the visited MSC because the visited MSC deems that the called party has already set an identifier of CFU. Even if the MSRN is acquired, the visited MSC of the called party may refuse an outbound call from the screening node to the called party by judging that the called party has subscribed the CFU.

### SUMMARY OF THE INVENTION

In view of the above, the present invention provides a call screening method and system to solve the problem that call is subjected to restriction in the call screening service.

In an aspect of the invention, a call screening method includes: receiving a call from a calling party to a called party, performing a screening on the call based on the calling and called numbers of the call, and acquiring, after the call passed the screening, an address of a visited MSC of the called party from a home location register (HLR) of the called party; sending a request for deactivating CFU to the visited MSC of the called party according to the address of the visited MSC of the called party, and sending, upon receipt of a CFU deactivation confirmation message returned by the visited MSC of the called party, a request for roaming number to the visited MSC of the called party; and initiating a call to the called party according to the roaming number returned by the visited MSC of the called party.

In another aspect of the invention, a call screening system includes:
a visited MSC of a calling party configured to receive a call from the calling party to a called party, send an SRI message to HLR of the called party to acquire routing information of the called party, and route the call to a screening device according to a received FTN and a received identifier of CFU;
   a screening device configured to receive the call from the calling party to the called party, perform a screening on the call based on the calling and called numbers of the call, and acquire, after the call passed the screening, an address of the visited MSC of the called party from the HLR of the called party, send a request for deactivating CFU to the visited MSC of the called party according to the address of the visited MSC of the called party, and send, upon receipt of a CFU deactivation confirmation message returned by the visited MSC of the called party, a request for roaming number to the visited MSC of the called party, and initiate a call to the called party according to the roaming number returned by the visited MSC of the called party;
   an HLR of the called party configured to receive the SRI message, and return the identifier of CFU and the FTN subscribed by the called party to the visited MSC of the calling party; and
   a visited MSC of the called party configured to receive the request for deactivating CFU, deactivate the locally held identifier of CFU of the called party, and send a roaming number allocated temporarily by itself to the screening device according to the received request for roaming number.

In another aspect of the invention, a call screening device includes: a screening unit configured to receive a call from a calling party to a called party, and perform a screening on the call based on the calling and called numbers of the call; a deactivating unit configured to acquire, after the call passed the screening, an address of a visited MSC of the called party from an HLR of the called party, and send a request for deactivating CFU to the visited MSC of the called party according to the address of the visited MSC of the called party; and a call initiating unit configured to acquire, upon receipt of a CFU deactivation confirmation message returned by the visited MSC of the called party, a roaming number from the visited MSC of the called party, and initiate a call to the called party according to the roaming number.

In another aspect of the invention, a mobile switching centre includes: a deactivating unit configured to receive a request for deactivating CFU sent by a screening device, deactivate a locally held identifier of CFU of the called party, and send a CFU deactivation confirmation message to the screening device; an allocating unit configured to receive a request for roaming number sent by the screening device, allocate a roaming number, and send the roaming number to the screening device; and a receiving unit configured to receive a call initiated by the screening device according to the roaming number.

In the embodiments of the invention, after a call passed the screening, a request for deactivating CFU is sent to the visited MSC of the called party, and after the identifier of CFU held in the visited MSC of the called party is deactivated, a roaming number is acquired from the visited MSC of the called party, and a call is initiated to the called party according to the roaming number. In such a way, a roaming number can be acquired from the visited MSC of the called party while performing the call screening, and the call from the calling party to the called party is no longer subjected to restriction of the visited MSC of the called party.

### BRIEF DESCRIPTION OF THE DRAWINGS

Fig. 1 schematically shows a basic flow of a call screening method according to an embodiment of the present invention;
Fig. 2 is schematically shows a basic flow of a call screening method according to an embodiment of the present invention;
Fig. 3 is a basic block diagram of a call screening system according to an embodiment of the present invention;
Fig. 4 is a logic structural diagram of a call screening device according to an embodiment of the present invention;
Fig. 5 is a logic structural diagram of a mobile switching center according to an embodiment of the present invention; and
Fig. 6 is a flow chart of a call screening method according to an embodiment of the present invention.

### DETAILED DESCRIPTION OF THE PREFERRED EMBODIMENTS

In the following, the present invention is described in detail with reference to accompanying drawings and specific embodiments in order to provide a clearer understanding of the objects, technical solutions and advantages of the present invention.

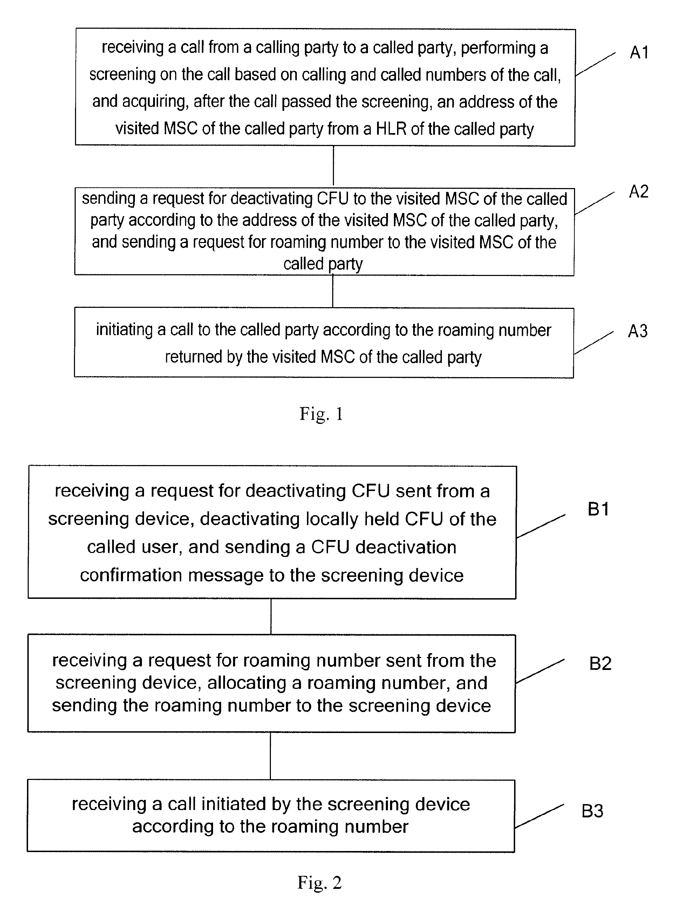

The basic flow of the call screening method according to an embodiment of the present invention is shown in Fig. 1, including steps of:
A1. receiving a call from a calling party to a called party, performing a screening on the call based on the calling and called numbers of the call, and acquiring, after the call passed the screening, an address of the visited mobile switching centre (visited MSC) of the called party from a home location register (HLR) of the called party.

The calling party calls the called party, and the call is routed to the visited MSC of the calling party. In this case, the called party has subscribed to a call screening service, and an identifier of Call Forward Unconditional (CFU) and a Forward-To Number (FTN) are set in the Home location register (HLR) at the visited location of the called party. The FTN may be a routing number of secretary station, which may be "district number + special service number", such as "025 + 12580", or "13800ABCXXX", such as "13800025500". The visited MSC of the calling party sends a Send Routing Information (SRI) message to the HLR of the called party, and the HLR of the called party returns the identifier of CFU and the FTN. Then, the call is routed to the secretary station in a manner of "forward" according to the identifier of CFU and the FTN (i.e. routing number of the secretary station).

The called party may enables the call screening service by, for example, setting Call Forward Unconditional by using a hand-set terminal or by sending a short message, or even by calling a special service number of the secretary station so that the secretary station may set HLR Call Forward Unconditional for him/her, in this case, the Forwarded To Number (FTN) is a routing number of secretary station, which ensures that the calls can be routed to a Gate Mobile Switch Center (GMSC) connected to the secretary station, and then routed to the secretary station by the GMSC.

The secretary station receives the call, obtains the calling and called numbers from the received call, and performs screening on the call based on a predetermined screening logic and the calling number. For example, a black list and a white list may be set, if calling number A is in the white list while calling numbers B, C are in the black list, A passes the screening while B, C fail. Then, the secretary station sends an SRI message to the HLR of the called party, so as to obtain an address of the visited MSC of the called party.

A2. Sending a request for deactivating CFU to the visited MSC of the called party according to the address of the visited MSC of the called party, and sending, upon receipt of a CFU deactivation confirmation message returned by the visited MSC of the called party, a request for roaming number to the visited MSC of the called party.

The visited MSC of the called party returns the address of the visited MSC of the called party, and an Insert Subscriber Data (ISD) message is sent to the visited MSC of the called party according to the address, so as to deactivate the CFU in the visited MSC of the called party. Upon receipt of a CFU deactivation confirmation message returned by the visited MSC of the called party, a request for roaming number (PRN) is sent to the visited MSC of the called party, to acquire a roaming number (MSRN) for routing the call allocated temporarily by the visited MSC of the called party.

A3. Initiating a call to the called party according to the roaming number returned by the visited MSC of the called party.

In this case, an outbound call is initiated to the called party according to the MSRN number for routing calls allocated temporarily by the visited MSC of the called party.

Upon receipt of the call from the secretary station, the called party answers, and after the conversation between them is ended, the secretary station recovers the CFU in the visited MSC of the called party, according to the address of the visited MSC of the called party acquired from the VLR of the called party.

Optionally, if the called party activated a color ring back tone (CRBT) service and the called party is in a busy state, the secretary station routes the call to the CRBT platform which plays the set CRBT tone for the calling party.

The basic flow of the call screening method according to an embodiment of the present invention is shown in Fig. 2, including steps of:
B1. Receiving a request for deactivating CFU sent by a screening device, deactivating the locally held identifier of CFU of the called party, and sending a CFU deactivation confirmation message to the screening device.

In this case, the screening device may be a secretary station. After it is confirmed that the calling number passes the screening, the screening device sends a request for deactivating CFU to the visited MSC of the called party. Upon receipt of the request for deactivating CFU, the visited MSC of the called party deactivates locally held identifier of CFU of the called party, and sends a CFU deactivation confirmation message to the screening device.

B2. Receiving a request for roaming number sent by the screening device, allocating a roaming number and sending the roaming number to the screening device.

Upon receipt of the CFU deactivation confirmation message, the screening device sends a request for roaming number to the visited MSC of the called party, the visited MSC of the called party responds to the request by temporarily allocating a roaming number and sending the roaming number to the screening device.

B3. Receiving a call initiated by the screening device according to the roaming number.

After obtaining the roaming number sent to the visited MSC of the called party, the screening device initiates a call to the called party according to the roaming number.

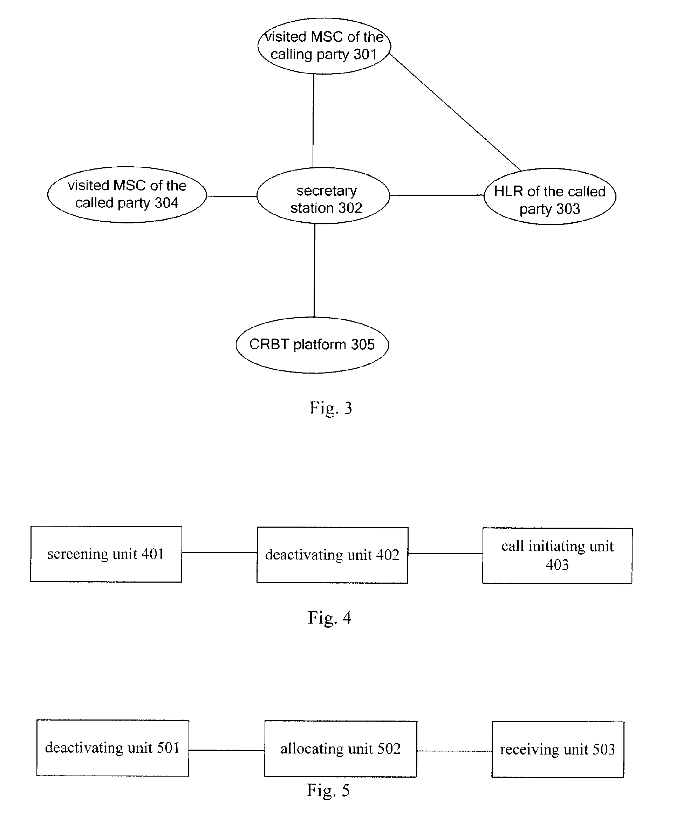

An embodiment of the present invention provides a call screening system, as shown in Fig. 3. The system includes: a visited MSC 301 of the calling party, a screening device 302, an HLR 303 of the called party, and a visited MSC 304 of the called party.

The visited MSC 301 of the calling party is configured to receive a call from the calling party to the called party, send an SRI message to the HLR of the called party to acquire routing information of the called party, and route the call to the screening device according to a received identifier of CFU and a received FTN.

The screening device 302 is configured to receive a call from the visited MSC 301 of the calling party to the called party, perform a screening on the call based on the calling and called numbers of the call, and after the call passed the screening, acquire an address of a visited MSC 304 of the called party from an HLR 303 of the called party; send a request for deactivating CFU to the visited MSC 304 of the called party according to the address of the visited MSC 304 of the called party, and upon receipt of a CFU deactivation confirmation message returned by the visited MSC 304 of the called party, send a request for roaming number to the visited MSC 304 of the called party, and initiate a call to the called party according to the roaming number returned by the visited MSC 304 of the called party after deactivating the locally held identifier of CFU.

The HLR 303 of the called party is configured to receive the SRI message, and returns the identifier of CFU and the FTN subscribed by the called party to the visited MSC 301 of the calling party.

The visited MSC 304 of the called party is configured to receive the request for deactivating CFU, deactivate the locally held identifier of CFU of the called party, and send a temporarily allocated roaming number to the screening device 302 according to the received request for roaming number.

The call screening system may further comprise a CRBT platform 305. In this case, the screening device 302 is further configured to route the call to the CRBT platform, when it is determined that the called party has activated the CRBT service and the state of a called party returned from the visited MSC of the called party indicates "busy". The CRBT platform 305 is configured to receive the call initiated by the screening device 302 to the called party, and plays CRBT tone for the calling party.

An embodiment of the present invention provides a call screening device, as shown in Fig. 4. The call screening device includes: a screening unit 401 configured to receive a call from the calling party to the called party, and perform a screening on the call based on the calling and called numbers of the call; a deactivating unit 402 configured to acquire, after the call passed the screening, an address of the visited MSC of the called party from the HLR of the called party, and send a request for deactivating CFU to the visited MSC of the called party according to the address of the visited MSC of the called party; and a call initiating unit 403 configured to acquire a roaming number from the visited MSC of the called party, after receiving a CFU deactivation confirmation message returned by the visited MSC of the called party, and initiate a call to the called party according to the roaming number.

An embodiment of the present invention provides a mobile switch center, as shown in Fig. 5. The mobile switching center includes: a deactivating unit 501 configured to receive the request for deactivating CFU sent from the screening device, deactivate the locally held identifier of CFU of the called party, and send a CFU deactivation confirmation message to the screening device; an allocating unit 502 configured to receive the request for roaming number sent from the screening device, allocate a roaming number, and send the roaming number to the screening device; and a receiving unit 503 configured to receive call initiated by the screening device according to the roaming number.

In particular, the call screening device in the above embodiment may be a secretary station, or any other logic network element that can be accessed in a manner of Call Forward Unconditional and can implement call screening.

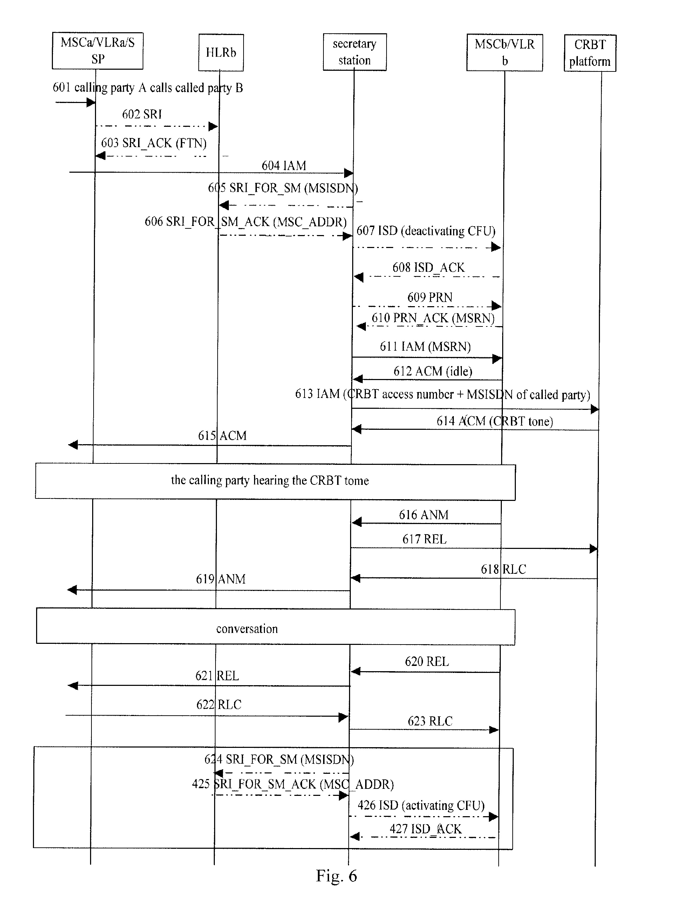

The above embodiments may be implemented in GSM network, or in CDMA or 3G network. In the 3G network, the current MSC changes into software MSC. In order that the above embodiment can be understood better, a particular process of the call screening method executed in the GSM network is described as follows. The flow of the method is shown schematically in Fig. 6. The system includes a CRBT platform, a secretary station, a visited MSC of calling party A (MSCa), a visited MSC of called party B (MSCb), and a Home Location Register HLRb of called party B. As the called party B has activated Call Forward Unconditional (CFU), an identifier of CFU is held in the visited MSC of the called party. The detailed process is described as follows:
601. Calling party A calls called party B, the call is sent to the visited MSC of the calling party (MSCa). For example, the number of the calling party A is 13905291988 and the number of the called party B is 13905291989. The called party B has activated a call screening service, Call Forward Unconditional is set on the HLR, and the FTN is the routing number of secretary station 12580.
602. MSCa sends an SRI message to the Home Location Register HLRb of the called party B for acquiring routing information of the called party.
603. As the called party B has set the identifier of CFU and the FTN in HLRb, and the FTN is the routing number of secretary station 12580, HLRb sends the identifier of CFU and the FTN 12580 of the called party B to MSCa via an SRI_ACK message.
604. MSCa sends an Initial Address Message (IAM) to the secretary station according to the identifier of CFU and the FTN 12580, routes the call and call information to the secretary station. The IAM includes the routing number of secretary station 12580, the calling number A and the called number B of the call.
   The secretary station judges whether the actual called party has subscribed to the call screening service, according to an original called number, and performs a screening on the call initiated by the calling party according to a screening rule preset by the called party. For example, calls of users in the black list (e.g. 13905291987 and 13905291986) are refused, and calls of users in the white list (e.g. 13905291989) are accepted. If the call fails the screening, the secretary station transfers the call to operator of the secretary station for message leaving and/or SMS message prompt. On the other hand, if the call passes the screening, the called party is connected. In this example, as the called number is 13905291989, the call passes the screening. The specific screening rule can be set according to the demand of the called party, and no restriction is imposed herein.
605. The secretary station sends an SRI message (SRI_FOR_SM) based on a Mobile Application Part (MAP) signaling to the HLRb, requesting the MSCb address.
606. HLRb returns an SRI_FOR_SM_ACK message, which carries address of the MSCb.
607. The secretary station sends an Insert subscriber Data (ISD) message to MSCb/VLRb. The ISD message contains a CFU deactivation flag for requesting the MSCb/VLRb to deactivate the CFU of the called party.
608. MSCb/VLRb returns an ISD_ACK message to the secretary station to indicate that the CFU is successfully deactivated.
609. The secretary station sends a MAP signaling based PRN message to the MSCb/VLRb according to the acquired MSCb address, requesting an MSRN for call routing allocated temporarily by the MSCb.
610. MSCb/VLRb returns a PRN_ACK message to the secretary station, the PRN_ACK message carries a MSRN allocated temporarily by MSCb.
611. The secretary station calls the called party through the MSRN, i.e. sends an IAM message that contains the acquired MSRN to MSCb/VLRb, according to the acquired MSRN.
612. The call is routed to MSCb/VLRb. As the identifier of CFU of the called party held in MSCb is deactivated, the MSCb connects the call to the called party, returns ringing tone and answer signaling to the secretary station, and returns an Address Complete Message (ACM) to the secretary station.
613. The secretary station refers to the state of the called party indicated in the ACM. If the state of the called party is idle, which means that the called party is ringing, the secretary station judges whether the called party has activated the CRBT service. If yes, the secretary station routes the call to the CRBT platform through CRBT access number + called MSISDN, e.g. the access number is 1176 and the MSISDN of the called party, i.e. the mobile phone number is 13905291989.
614. The CRBT platform returns the CRBT tone set by the called party to the secretary station through the ACM message.
615. The secretary station returns the CRBT tone set by the called party to the calling party through the ACM message.
616. After the called party answers, the MSCb returns an Address Answer Signal Message (ANM) to the secretary station.
617. The secretary station sends a Release (REL) message to the CRBT platform, instructing to stop playing the CRBT tone.
618. The CRBT platform returns a Release Complete (RLC) message, indicating that playing of the CRBT tone has been stopped.
619. The secretary station returns an ANM message to the calling party, and connects the calling and called parties to execute normal conversion between the calling and called parties.
620. When the conversion is ended, the MSCb sends a REL message to the secretary station to indicate that the conversion is ended.
621. The secretary station sends a REL message to the MSCa.
622. MSCa returns a RLC message to the secretary station.
623. The secretary station sends the RLC message to the MSCb.
624. The secretary station sends a MAP-based SRI_FOR_SM message to the HLRb, requesting address of the MSCb.
625. The HLRb returns an SRI_FOR_SM_ACK message that carries address of the MSCb.
626. The secretary station sends an ISD message to the MSCb/VLRb, and the message contains a request for activating CFU of the called party.
627. The MSCb/VLRb returns an ISD_ACK message to the secretary station to indicate that the CFU is activated.

According to the embodiments of the invention, a screening is performed on the call from the calling party to the called party, and then, after the call passed the screening, a request for deactivating CFU is sent to the visited MSC of the called party; after an identifier of the CFU held in the visited MSC of the called party is deactivated, a roaming number from the visited MSC of the called party is acquired and a call to the called party is initiated according to the roaming number, so that a roaming number can be acquired from the visited MSC of the called party while the call screening is performed, and the call from the calling party to the called party is no longer subjected to restriction of the visited MSC of the called party. Moreover, if the called party has subscribed a CRBT service, and is idle, the call will be routed to the CRBT platform, which plays CRBT tone for the calling user. Therefore, the problem in the prior art that the CRBT tone get lost is overcome.

It should be understood by those skilled in this art that steps of each method of the above embodiments, as a whole or in part, can be implemented by a program instructing relevant hardware. The program may be embodied on one or more computer readable storage medium. Examples of the computer readable storage medium may include ROM, RAM, magneto disk or optical disk.

The invention has been described in connection with specific examples. However, it is possible for persons skilled in the art to make various modifications and variations to the present invention without departing from the principles and scopes of the present invention. Accordingly, the present invention is intended to cover such and modifications provided that they fall within the scope of the claims and equivalents thereof.

## Claims

1. A call screening method, comprising:
receiving a call from a calling party to a called party, performing a screening on the call, and acquiring, after the call passed the screening, an address of a visited Mobile Switch Center, MSC, of the called party from a Home Location Register, HLR, of the called party;
sending a request for deactivating Call Forward Unconditional, CFU, to the visited MSC of the called party according to the address of the visited MSC of the called party, and sending, upon receipt of a CFU deactivation confirmation message returned by the visited MSC of the called party, a request for roaming number to the visited MSC of the called party; and
initiating a call to the called party according to the roaming number returned by the visited MSC of the called party.

2. The call screening method according to claim 1, wherein the process of receiving the call from the calling party to the called party comprises:
receiving a call initiated by a visited MSC of the calling party according to a Forward-To Number, FTN, and an identifier of the CFU subscribed by the called party, which are acquired from a Home Location Register, HLR, of the called party.

3. The call screening method according to claim 1 or 2, wherein the process of performing the screening on the call comprises:
extracting a calling number and a called number from the call, and performing a screening on the call in connection with a screening logic preset by the called party.

4. The call screening method according to claim 3, further comprising, after the process of initiating the call to the called party,
routing the call to a color ring back tone, CRBT, platform, when it is determined that the called party has subscribed to a CRBT service, and the state of the called party returned by the visited MSC is idle.

5. The call screening method according to claim 1 or 2, further comprising:
upon receipt of a call release message sent from the visited MSC of the called party, acquiring an address of the visited MSC of the called party from the HLR of the called party, and sending a request for activating the CFU of the called party to the visited MSC of the called party, according to the address of the visited MSC of the called party.

6. A call screening method, comprising:
receiving a request for deactivating Call Forward Unconditional, CFU, sent from a screening device, deactivating the locally held identifier of CFU of the called party, and sending a CFU deactivation confirmation message to the screening device;
receiving a request for roaming number sent from the screening device, allocating a roaming number, and sending the roaming number to the screening device; and
receiving a call initiated by the screening device according to the roaming number.

7. A call screening system, comprising a visited mobile switching centre, MSC, of a calling party, a screening device, a home location register, HLR, of a called party, and a visited MSC of a called party, wherein,
the visited MSC of the calling party is configured to receive a call from the calling party to the called party, send a Send Routing Information, SRI, message to the HLR of the called party to acquire routing information of the called party, and route the call to the screening device according to a received Forward-To Number, FTN, and a received identifier of Call Forward Unconditional, CFU;
the screening device is configured to receive the call from the calling party to the called party, perform a screening on the call according to calling and called numbers of the call, acquire, after the call passed the screening, an address of the visited MSC of the called party from the HLR of the called party, send a request for deactivating CFU to the visited MSC of the called party according to the address of the visited MSC of the called party, and send, upon receipt of a CFU deactivation confirmation message returned by the visited MSC of the called party, a request for roaming number to the visited MSC of the called party, and initiate a call to the called party according to the roaming number returned by the visited MSC of the called party;
the HLR of the called party is configured to receive the SRI message, and return the identifier of the CFU and the FTN subscribed by the called party to the visited MSC of the calling party; and
the visited MSC of the called party is configured to receive the request for deactivating CFU, deactivate the locally held identifier of CFU of the called party, and send a roaming number to the screening device according to the received request for roaming number.

8. The call screening system according to claim 7, further comprising a color ring back tone, CRBT, platform configured to receive the call and play CRBT tone for the calling party,
wherein the screening device is further configured to route the call to the CRBT platform, when it is determined that the called party has activated a CRBT service, and the state of the called party returned by the visited MSC is idle.

9. A call screening device, comprising:
a screening unit configured to receive a call from a calling party to a called party, and performing a screening on the call;
a deactivating unit configured to acquire, after the call passed the screening, an address of a visited mobile switching centre, MSC, of the called party from a home location register, HLR, of the called party, and send a request for deactivating Call Forward Unconditional, CFU to the visited MSC of the called party according to the address of the visited MSC of the called party; and
a call initiating unit configured to acquire, upon receipt of a CFU deactivation confirmation message returned by the visited MSC of the called party, a roaming number from the visited MSC of the called party, and initiate a call to the called party according to the roaming number.

10. A mobile switching centre, comprising:
a deactivating unit configured to receive a request for deactivating Call Forward Unconditional, CFU, sent from a screening device, deactivate a locally held identifier of CFU of a called party, and send a CFU deactivation confirmation message to the screening device;
an allocating unit configured to receive a request for roaming number sent from the screening device, allocate a roaming number, and send the roaming number to the screening device; and
a receiving unit configured to receive a call initiated by the screening device according to the roaming number.
